# EUROPÄISCHE PATENTANMELDUNG

(11) **EP 1 653 537 A1**
(43) Veröffentlichungstag der Anmeldung: **03.05.2006**
(21) Anmeldenummer: 04025726.3
(22) Anmeldetag: 29.10.2004
(51) Int. Cl.: H01M 8/02

(54) **Kühlplattenmodul für einen Brennstoffzellenstack**

(71) Anmelder: SGL CARBON AG, 65203 Wiesbaden (DE)
(72) Erfinder: Müller, Alwin, 97084 Würzburg (DE); Kauranen, Pertti, Dr., 86672 Thierhaupten (DE)

(57) **Zusammenfassung**

Es wird ein Kühlplattenmodul für Brennstoffzellenstacks bereit gestellt, umfassend eine anodenseitige und eine kathodenseitige Polplatte, deren einander zugewandte Oberflächen Kühlflächen eine Kühlmittelverteilstruktur dicht umschließen und durch ein Klebemittel miteinander verbunden sind. Erfindungsgemäß wird das Klebemittel ausschließlich außerhalb der von einer Dichtung umfassten Kühlmittelverteilstruktur auf die Kühlflächen aufgetragen, so dass Klebemittel und Kühlmittel keinen Kontakt miteinander haben. Da der Stromtransport zwischen den Polplatten hauptsächlich über in der Kühlmittelstruktur angeordnete Kontaktelemente erfolgt, ist es nicht erforderlich, dass das Klebemittel elektrisch leitfähig ist.

## Beschreibung

Die Erfindung betrifft ein Modul aus zwei miteinander verbundenen Polplatten für einen Brennstoffzellenstapel, wobei die beiden Polplatten eine Külmittelverteilstruktur dicht umschließen.

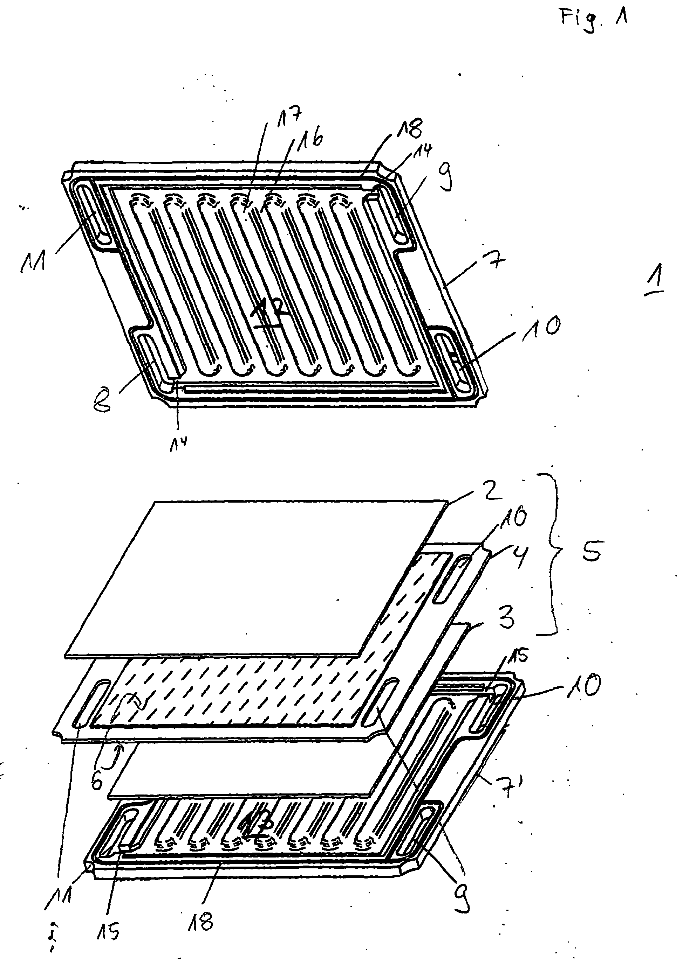

Brennstoffzellen sind Vorrichtungen zur direkten Umwandlung chemischer in elektrische Energie. Eine einzelne Brennstoffzelle 1 (Figur 1) enthält zwei Elektroden Anode 2 und Kathode 3 mit einer dazwischen liegenden Elektrolytschicht, z.B. einer Protonen leitenden Membran 4. Dieser Verbund wird als Membran-Elektroden-Einheit (MEA) 5 bezeichnet. An der Anode 2 erfolgt die Oxidation eines Brennstoffs, z.B. Wasserstoff oder Methanol, unter Freisetzung von Protonen und Elektronen. Die freigesetzten Elektronen fließen über einen äußeren Stromkreis, in welchem sie elektrische Arbeit verrichten, zur Kathode 3. Die freigesetzten Protonen werden durch die Membran 4 zur Kathode 3 transportiert. Hier wird unter Aufnahme der Elektronen und Protonen ein Oxidationsmittel, z.B. Sauerstoff, reduziert. Die Grenzflächen zwischen Anode 2 bzw. Kathode 3 und Elektrolyt 4 sind mit Katalysatoren 6 beschichtet, welche die jeweilige Elektrodenreaktion beschleunigen.
Für praktische Anwendungen wird meist eine Vielzahl von Brennstoffzellen in einem von Endplatten begrenzten Stapel ("stack") kombiniert, um die benötigte Leistung zu erreichen. Vor der ersten und nach der letzten Zelle sind Stromabnehmer vorgesehen. Die gestapelten Zellen werden durch Längsverschraubungen, Verklammerungen oder andere geeignete Mittel (in Figur 1 nicht dargestellt) aneinander gepresst und verspannt.
Üblicherweise sind die Zellen im Stack elektrisch in Serie, bezüglich der Medienführung jedoch parallel geschaltet. Den elektrischen Kontakt zwischen den benachbarten Zellen stellen Bipolarplatten (BPP) 7, 7' her. Die aufeinander folgenden BPP 7 und MEA 5 weisen fluchtend angeordnete Durchgangslöcher für die Brennstoffzufuhr 8 und die Brennstoffabfuhr 9 sowie für die Oxidationsmittelzufuhr 10 und die Oxidationsmittelabfuhr 11 auf. Diese fluchtend angeordneten Durchgangslöcher formen Verteil- und Sammelleitungen (Manifolds), welche den Stack in Stapelrichtung durchqueren und die Reaktionsmedien den einzelnen Zellen zu- bzw. von ihnen abführen.
Die Versorgung der einzelnen Elektroden mit den Reaktionsmedien erfolgt über in die Oberflächen der BPP 7 eingelassene Verteilstrukturen. Diese Verteilstrukturen umfassen für die gleichmäßige Verteilung des Reaktionsmediums über die Elektrodenfläche geeignet angeordnete Strömungswege, z.B. Kanäle 17. Hervorstehende Elemente, z.B. Stege 16 zwischen den Kanälen 17, stellen den elektronischen Kontakt zur angrenzenden Elektrode 2 bzw. 3 her. Die Verteilstruktur 12 auf der Anodenseite der BPP 7 dient zur Verteilung des Brennstoffs über die Fläche der Anode 2, die Verteilstruktur 13 auf der Kathodenseite zur Verteilung des Oxidationsmittels über die Fläche der Kathode 3. Die Verteilstrukturen 12, 13 sind mit den Durchgangslöchern der entsprechenden Medienzufuhrleitungen 8, 10 und Medienabfuhrleitungen 9, 11 verbunden. Diese Verbindungen sind in Figur 1 als 14 und 15 gekennzeichnet. Der Bereich der Oberfläche der Bipolarplatte, der über die Kontaktstege in elektrischem Kontakt und über die Medienverteilstruktur in Stoffaustausch mit der angrenzenden Elektrode steht, wird im folgenden als aktive Fläche bezeichnet. Die Durchgangslöcher 8, 9, 10, 11 liegen außerhalb der aktiven Fläche. Die in Figur 1 dargestellten Verteilstrukturen 12, 13 sind nur beispielhaft zu verstehen, sie sollen nicht als Beschränkung auf eine bestimmte Verteilstruktur oder Bevorzugung einer bestimmten Verteilstruktur verstanden werden.

Neben dieser Bauweise mit Medienzufuhr- und -abfuhrleitungen, die durch fluchtende Durchgangslöcher 8, 9, 10, 11 in den Stackkomponenten gebildet werden (internal manifolding) sind auch Stacks mit außerhalb der BPP- und MEA-Oberflächen angeordneten Medienzufuhr- und -abfuhrleitungen (external manifolding) bekannt. In diesem Fall erfolgt die Medienzu- und -abfuhr über seitlich an den stack angesetzte Verteil- und Sammelleitungen, welche mit den jeweiligen Medienverteilstrukturen auf den Plattenoberflächen verbunden sind.

Austritt und Vermischung der verschiedenen Reaktionsmedien müssen verhindert werden. Dazu wird einerseits die Anodenseite jeder BPP 7 gegen die Durchgangslöcher 10, 11 für den Oxidationsmitteltransport sowie andererseits die Kathodenseite gegen die Durchgangslöcher 8, 9 für den Brennstofftransport abgedichtet. Außerdem werden die in die Plattenoberflächen eingelassenen Verteilstrukturen 12, 13 von Dichtungen 18 so umschlossen, dass der Austritt der Reaktionsmedien an den Grenzflächen zwischen BPP und MEA verhindert wird.

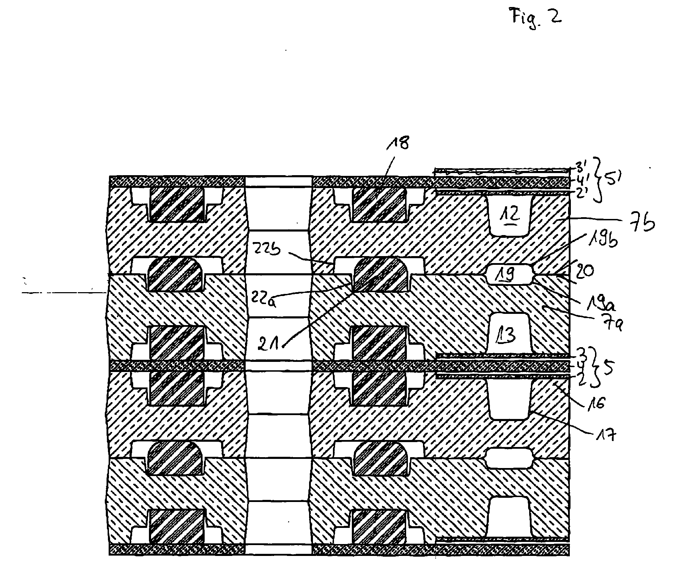

Bei den Elektrodenreaktionen wird Wärme freigesetzt. Diese muss abgeführt werden, um eine Aufheizung der Zellen zu vermeiden. Dafür wird ein Kühlmittel, z.B. deionisiertes Wasser oder ein Thermalöl, durch den Stack geleitet. In einer bekannten Ausführung (Figur 2) eines gekühlten Stacks befindet sich zwischen zwei Membran-Elektroden-Einheiten 5, 5' statt einer einstückigen Bipolarplatte 7 ein Paar aus zwei Polplatten 7a, 7b, welche eine Kühlmittelverteilstruktur umschließen. Die aneinander stoßenden Oberflächen der Polplatten 7a, 7b werden im folgenden Kühlflächen genannt. Die Kühlmittelverteilstruktur ist ähnlich aufgebaut wie die Verteilstrukturen 12, 13 für die Reaktionsmedien und umfasst in mindestens eine der Kühlflächen eingelassene Kanäle 19, durch welche das Kühlmittel fließt, und die Kanäle begrenzende Stege 20 o.ä. hervorstehende Elemente, welche den elektrischen Kontakt zwischen den benachbarten Kühlflächen herstellen und so den Stromfluss von der aktiven Fläche der Polplatte 7a zur aktiven Fläche der Polplatte 7b ermöglichen.

Für die Zu- und Abfuhr des Kühlmittels sind weitere den Stack durchquerende Transportwege vorzusehen, und die Transportwege des Kühlmittels und der Reaktionsmedien müssen gegeneinander abgedichtet werden. Weiterhin sind zwischen den Kühlflächen der Polplatten 7a, 7b Dichtungen 21 nötig, um den Austritt des Kühlmittels aus der Kühlmittelverteilstruktur zu verhindern. Die Dichtung 21 wird von in die Kühlflächen der Polplatten 7a, 7b eingelassenen, zusammen wirkenden Dichtungsnuten 22a, 22b aufgenommen.

Wie in Figur 1 und 2 dargestellt, ist in die der Anode 2' der MEA 5' zugewandte Oberfläche der anodenseitigen Polplatte 7b eine Kanalstruktur 12 zur flächigen Verteilung des Brennstoffs eingelassen. In die der Kathode 3 der MEA 5 zugewandte Oberfläche der kathodenseitigen Polplatte 7a ist eine Kanalstruktur 13 zur flächigen Verteilung des Oxidationsmittels eingelassen. In einer alternativen Variante sind die den Elektroden zugewandten Oberflächen der Polplatten eben, und die Reaktionsmedienverteilstruktur ist in die der Polplatte zugewandte Oberfläche der jeweiligen Elektrode eingelassen.

Um die Anzahl der Einzelkomponenten für einen Stack zu verringern und die Montage zu erleichtern, ist es erwünscht, einzelne Komponenten zu vorgefertigten Baugruppen (Modulen) zu kombinieren. Beispielsweise offenbart EP 1 009 051 A einen Verbund aus einer anodenseitigen Polplatte und einer kathodenseitige Polplatte. Die Polplatten bestehen aus einem korrosionsbeständigen elektrisch leitfähigen Material, beispielsweise aus Metall, Graphit oder einem Verbundwerkstoff aus einem Kunststoff und Kohlenstoff bzw. Graphit. In den Kühlflächen der Polplatten sind Kanäle für den Fluss eines Kühlmittels eingelassen. Die Kanäle werden von hervorstehenden Materialstegen begrenzt. Die Oberflächen der Stege auf der Kühlfläche der ersten Polplatte stoßen an die Oberflächen der Stege auf der Kühlfläche der zweiten Polplatte. Diese Berührungsflächen stellen den elektrischen Kontakt zwischen den Polplatten her.

Die anodenseitige und die kathodenseitige Polplatte werden durch ein leitfähiges Klebemittel elektrisch leitend miteinander verbunden. Das Klebemittel enthält in einer Polymermatrix, beispielsweise Epoxidharz, dispergierte korrosionsbeständige leitfähige Partikel, beispielsweise aus Silber, Gold, Platin, Nickel oder Graphit. Der Masseanteil der leitfähigen Partikel im Klebemittel beträgt 20 bis 40 %. Der spezifische elektrische Widerstand des Klebemittels darf 1 Ohm*cm nicht überschreiten.

In einer alternativen Variante wird ein leitfähiges flächiges Element, z.B. ein Blech, zwischen die Kühlflächen der Polplatten gelegt und durch ein leitfähiges Klebemittel mit den Kühlflächen verbunden. Das Blech trennt die Kühlkanäle auf der Kühlfläche der ersten Polplatte von den Kühlkanälen auf der Kühlfläche der zweiten Polplatte, oder das Blech ist mit Perforationen versehen, welche die Kühlkanäle auf der Kühlfläche der ersten Polplatte mit denen auf der Kühlfläche der zweiten Polplatte verbinden.

Alle in der EP 1 009 051 A vorgestellten Konzepte sind an die Verwendung eines leitfähigen Klebemittels gebunden. Das Klebemittel muss überall dort appliziert werden, wo elektrischer Kontakt zwischen den Kühlflächen hergestellt werden soll, also beispielsweise auf den Oberflächen aller Stege in der Kühlmittelverteilstruktur. Nur am äußeren Umfang der Kühlflächen und an den Rändern der Durchgangslöcher werden Dichtraupen aufgebracht, die auch aus einem nicht leitfähigen Material, z.B. Silicon, gefertigt werden können.

Die mit dem Klebemittel beschichteten, den elektrischen Kontakt zur benachbarten Polplatte herstellenden Stege auf den Kühlflächen grenzen unmittelbar an die vom Kühlmittel durchströmten Kanäle. Dadurch kommt das Klebemittel zwangsläufig mit dem Kühlmittel in Kontakt. Aus dieser Situation ergibt sich als weitere zwingende Anforderung an das Klebemittel, dass es gegenüber dem aufgeheizten Kühlmittel beständig sein muss. Dabei ist zu beachten, dass dem Kühlmittel für bestimmte Anwendungsfälle Frostschutzmittel oder/und andere Hilfsstoffe zugesetzt werden, gegenüber denen das Klebemittel ebenfalls unempfindlich sein muss. Daher und auch aus ökonomischen Gründen ist es wünschenswert, den großflächigen Einsatz leitfähiger Klebemittel im Kühlplattenverbund zu vermeiden.

Die Aufgabe der vorliegenden Erfindung besteht darin, ein Kühlplattenmodul aus anodenseitiger und kathodenseitiger Polplatte, deren aneinander stoßende Oberflächen (Kühlflächen) miteinander in elektrischem Kontakt stehen und eine Kühlmittelverteilstruktur dicht umschließen, zur Verfügung zu stellen, wobei der Zusammenhalt der Polplatten durch ein Klebemittel bewirkt wird, das keine besonderen Anforderungen hinsichtlich der elektrischen Leitfähigkeit erfüllen muss.

Ferner ist es eine Aufgabe der Erfindung, in einem solchen Kühlplattenmodul Kontakt zwischen Klebemittel und Kühlmittel zu vermeiden.

Diese Aufgabe wird gelöst durch ein Modul umfassend eine anoden- und eine kathodenseitige Polplatte, deren einander zugewandte Oberflächen als Kühlflächen eine Kühlmittelverteilstruktur umschließen, welche durch eine Dichtung umfasst und nach außen abgedichtet wird,
wobei außerhalb des von der Dichtung umfassten Bereichs auf mindestens eine der Kühlflächen ein Klebemittel appliziert wird, welches die Polplatten in ihrer Lage zueinander fixiert und miteinander verbindet.
Das Klebemittel wird erfindungsgemäß ausschließlich auf solche Bereiche der Kühlflächen appliziert, die sich außerhalb der Kühlmittelverteilstruktur befinden. Die Oberflächen der hervorstehenden Elemente der Kühlmittelverteilstruktur, in Figur 2 beispielhaft als Stege 20 dargestellt, bleiben frei von Klebemittel, so dass hier ein direkter elektrischer Kontakt zwischen den aneinander stoßenden Kühlflächen möglich ist.
Weil das Klebemittel nicht in dem Bereich der Kühlfläche appliziert wird, der unmittelbar für den elektrischen Kontakt zwischen den aktiven Flächen der Polplatten benötigt wird, muss das Klebemittel selbst nicht leitfähig sein.
Das Klebemittel kommt nicht mit dem Kühlmittel in Berührung, denn die Klebeflächen liegen außerhalb der von der Dichtung 21 umschlossenen Kühlmittelverteilstruktur. Daher ist die Beständigkeit des Klebemittels gegenüber dem Kühlmittel und ggf. dem Kühlmittel zugesetzten Hilfsstoffen nicht kritisch.
Das Klebemittel selbst muss auch keine Dichtungsfunktion erfüllen, denn in dem erfindungsgemäßen Kühlplattenmodul wird die Grenzfläche zwischen den Kühlflächen durch die Dichtung 21 abgedichtet. Die Dichtung 21 umschließt den von Kühlkanälen 19 durchzogenen Bereich der Kühlfläche und verhindert so den Austritt des Kühlmittels.

Weitere Vorteile, Details und spezielle Ausführungsformen der Erfindung werden in der folgenden ausführlichen Beschreibung dargelegt.

Die Figuren zeigen:
- Figur 1: Ausschnitt aus einem Brennstoffzellenstapel
- Figur 2: Querschnitt durch einen Brennstoffzellenstapel mit Kühlmittelverteilstruktur zwischen den Polplatten
- Figur 3: Draufsicht auf die Kühlfläche einer Polplatte mit Kühlmittelverteilstruktur, Dichtungen und Kennzeichnung der erfindungsgemäßen Klebeflächen
- Figur 4: Querschnitt durch einen Brennstoffzellenstapel mit erfindungsgemäßen Kühlplattenmodulen

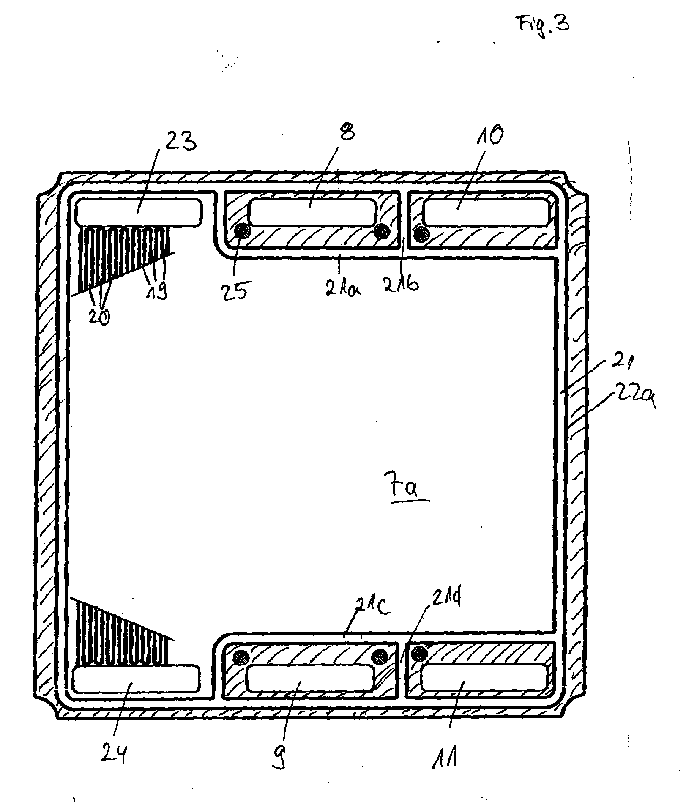

Das erfindungsgemäße Kühlplattenmodul umfasst eine kathodenseitige Polplatte 7a und eine anodenseitige Polplatte 7b, deren aneinander stoßende Oberflächen als Kühlflächen eine Kühlmittelverteilungsstruktur umschließen, sowie eine Dichtung 21 zur Abdichtung der Grenzfläche zwischen den Kühlflächen der Polplatten. Mindestens eine der Kühlflächen ist mit Kanälen 19 zur flächigen Verteilung eines Kühlmittels versehen. Figur 3 zeigt die Draufsicht auf die Kühlfläche einer Polplatte 7a mit einer angedeuteten Kühlmittelverteilstruktur und den zugehörigen Dichtungen. In Stacks mit interner Medienzu- und abfuhr (internal manifolding) erfolgt die Kühlmittelzufuhr über ein Durchgangsloch 23 und die Kühlmittelabfuhr über ein Durchgangsloch 24. Alle MEA und Polplatten eines Stacks weisen jeweils an derselben Stelle solche Durchgangslöcher auf. Beim Stapeln der MEA und Polplatten zu einem Stack fluchten diese Durchgangslöcher, so dass den Stack durchquerende Transportwege gebildet werden. Das Kühlmittel tritt über das Durchgangsloch 23 aus der Zufuhrleitung in die Kühlkanäle 19 auf der Kühlfläche ein, durchströmt die Kühlmittelkanäle 19, und tritt über das Durchgangsloch 24 aus den Kühlkanälen 19 in die Kühlmittelabfuhrleitung aus.
In Figur 3 wurde der Übersichtlichkeit wegen der genaue Verlauf der Kühlkanäle ausgespart, denn dieser ist für die vorliegende Erfindung nicht relevant. Dem Fachmann ist eine Vielzahl geeigneter Kanalstrukturen ("flow fields") bekannt, die Erfindung ist nicht an eine bestimmte Kanalstruktur gebunden. Die Kanalstrukturen für die Verteilung des Kühlmittels bestehen beispielsweise aus mehreren parallelen Kanälen, die von einem gemeinsamen Zufuhrleitung gespeist werden und in eine gemeinsame Sammelleitung münden, oder aus einem oder mehreren mäanderförmig gewundenen Kanälen.
Häufig ist es ausreichend, wenn eine der beiden aneinander stoßenden Kühlflächen mit einer Kanalstruktur versehen ist. Die andere, ebene Kühlfläche bedeckt dann die Kanäle auf der ersten Kühlfläche. In einer anderen Variante des erfindungsgemäßen Kühlplattenverbunds (Figur 2) sind die Kühlflächen beider Polplatten 7a, 7b mit je einer Kanalstruktur 19a, 19b versehen, wobei die Kanalstruktur 19b auf der Kühlfläche der zweiten Polplatte 7b das Spiegelbild der Kanalstruktur 19a auf der ersten Polplatte 7a ist. Beim Aufeinanderlegen der Kühlflächen ergänzen sich so die Kanäle in der Kühlfläche der ersten Polplatte mit den Kanälen der Kühlfläche der zweiten Polplatte zu einer gemeinsamen, von einer Dichtung 21 umschlossenen Kühlmittelverteilstruktur.

Bei der Bauweise "internal manifolding" weist jede Polplatte weiterhin Durchgangslöcher für die Brennstoffzufuhr 8, Brennstoffabfuhr 9, Oxidationsmittelzufuhr 10 und Oxidationsmittelabfuhr 11 des Stacks auf. Diese haben keine Verbindung zur Kühlmittelverteilstruktur.

Zwischen der kathodenseitigen Polplatte 7a und der anodenseitigen Polplatte 7b befindet sich die Dichtung 21. Wie in Figur 3 gezeigt, umschließt diese in der Dichtungsnut 22a liegende Dichtung 21 die Kühlmittelverteilstruktur einschließlich der mit den Kühlkanälen verbundenen Durchgangslöcher 23 und 24 für die Kühlmittelzufuhr bzw. -abfuhr. Diese Dichtung dichtet die Grenzfläche zwischen den Kühlflächen der beiden Polplatten 7a, 7b ab und verhindert so das Heraustreten des Kühlmittels. Der Bereich der Kühlfläche, der sich außerhalb der Dichtung 21 befindet, wird im folgenden als Peripherie bezeichnet.
Die Durchgangslöcher 8, 9, 10, 11 werden, wie in Bild 3 dargestellt, durch von der Dichtung 21 abzweigende Dichtungsstränge 21 a, 21 b, 21 c, 21 d umschlossen, so dass kein Eindringen der Reaktionsmedien in die Kühlmittelverteilstruktur möglich ist. Alternativ können die Durchgangslöcher 8, 9, 10 11 durch separate Dichtungen umfasst werden.
Die Dichtungen auf den Kühlflächen können als Flachdichtungen, als Profildichtungen oder als O-Ringe ausgebildet sein. In den Kühlflächen der Polplatten 7a, 7b sind, wie in Figur 2 dargestellt, Nute 22a, 22b vorgesehen, welche die Dichtungen aufnehmen.
Die Kühlfläche der zweiten Polplatte 7b, die mit der in Figur 3 dargestellten Polplatte 7a zu dem erfindungsgemäßen Kühlplattenmodul kombiniert wird, enthält an den entsprechenden Stellen komplementäre Dichtungsnuten 22b, die mit den Dichtungsnuten 22a auf der Kühlfläche der ersten Polplatte 7a zusammen wirken und die Dichtungen 21 umschließen.

Obwohl Figur 3 beispielhaft eine Polplatte mit Durchgangslöchern für die Medien zu- und - abfuhr, d.h. für eine Bauweise mit internal manifolding zeigt, ist die Erfindung nicht auf diese Stackausführung beschränkt; sie lässt sich auch für Stacks mit externer Medien- und -abfuhr (external manifolding) verwenden. Entscheidend für die Erfindung ist nur, dass das Klebemittel außerhalb der von der Dichtung 21 umschlossenen Kühlmittelverteilstruktur auf die Kühlfläche appliziert wird.

Die Polplatten, die das erfindungsgemäße bipolare Kühlplattenmodul bilden, bestehen aus einem elektrisch leitfähigen korrosionsbeständigen impermeablen Material, beispielsweise Graphit, Metall oder einem Verbundwerkstoff aus Kunststoff und leitfähigen Partikeln. Nicht ausreichend korrosionsbeständige Metalle müssen zur Verminderung der Korrosion legiert oder/und mit einem korrosionsfesten elektrisch leitfähigem Überzug, beispielsweise aus einem Edelmetall, versehen werden.
Graphit kann in verschiedenen Formen eingesetzt werden. Aus monolithischen Blöcken von synthetischem Graphit können durch spanende Bearbeitung Polplatten gefertigt werden. Andererseits können entsprechend strukturierte Folien aus gepresstem Graphitexpandat als Polplatten benutzt werden.
Besonders vorteilhaft ist die Herstellung der Polplatten aus Verbundwerkstoffen aus Kunststoff und leitfähigen Partikeln, weil hier aus der Kunststofftechnik bekannte Formgebungsverfahren wie Spritzgießen -ggf. mit einigen Modifikationen- eingesetzt werden können. In herkömmlichen isolierenden Kunststoffen wie Polypropylen, Polyvinylidenflurorid, Vinylester oder Phenol- oder Epoxidharzen kann durch Zusatz leitfähiger Partikel, beispielsweise Partikel aus synthetischem oder Naturgraphit, Graphitexpandat, Ruß, Kohlenstofffasern, Metallspäne, Metallfasern oder Kombinationen aus mehreren dieser leitfähigen Partikelsorten, elektrische Leitfähigkeit erzielt werden. Die Konzentration der leitfähigen Partikel muss hoch genug sein, um die Perkolationsschwelle zu überschreiten, so dass in der Kunststoffmatrix ein durchgehendes Netzwerk von elektrischen Leitungspfaden entsteht. Der dazu nötige hohe massenbezogene Anteil der leitfähigen Partikel (über 60 %) vermindert jedoch die Fließfähigkeit des Kunststoffs, so dass bei seiner Verarbeitung mittels bekannter Kunststoffverarbeitungsverfahren entsprechende Vorkehrungen getroffen werden müssen. Diese Maßnahmen sind jedoch dem Fachmann bekannt. Alternativ können Polplatten aus einem Verbundwerkstoff aus Kunststoff und leitfähigen Partikeln in einem entsprechend strukturierten Presswerkzeug geformt werden.

Geeignete Dichtungsmaterialien sind beispielsweise Thermoplastische Elastomere (TPE), Thermoplastisches Urethan (TPU), Liquid Silicone Rubber (LSR), Ethylen-Propylen-Dien-Elastomer (EPDM), Polytetrafluoroethylen PTFE oder Fluoroelastomere oder Silikone. Die Dichtungen 18 und 21 können als Flachdichtungen, als Profildichtungen oder als O-Ringe ausgebildet sein. Die Dichtung wird beispielsweise in bekannter Weise aus dem Dichtungsmaterial vorgefertigt und in die Dichtungsnut einer der beiden zu verbindenden Polplatten eingelegt oder eingeklebt. Verfahren zur Herstellung solcher Dichtungen sind bekannt, beispielsweise werden Flachdichtungen aus einem flächigen Halbzeug aus dem Dichtungsmaterial ausgestanzt oder ausgeschnitten, beispielsweise strahlgeschnitten. Auch Techniken für das Herstellen von O-Ringen oder Profildichtungen sind dem Fachmann bekannt.

Alternativ kann das Dichtungsmaterial direkt in die Dichtungsnuten auf die Kühlfläche einer der Polplatten des erfindungsgemäßen Kühlplattenmoduls appliziert werden, beispielsweise mittels eines Dosierroboters oder durch Spritzgießen.

Das Klebemittel muss erfindungsgemäß keine besonderen Anforderungen hinsichtlich Leitfähigkeit und Beständigkeit gegenüber dem Kühlmittel erfüllen. Daher kann für die Herstellung des erfindungsgemäßen Kühlplattenmoduls jedes Klebemittel verwendet werden, das geeignet ist, einen Verbund zwischen den beiden Polplatten herzustellen. Verschiedene kommerziell erhältliche Klebemittel sind einsetzbar. Für das Verbinden von Polplatten aus Kunststoff-Graphit-Verbundwerkstoffen haben sich beispielsweise Klebemittel auf Basis von Epoxidharz oder Cyanacrylat als geeignet erwiesen.
Als Klebeflächen dienen ausschließlich jene Bereiche der Kühlfläche, die außerhalb der von einer Dichtung 21 umschlossenen Kühlmittelverteilstruktur, also in der Peripherie der Kühlfläche liegen (vgl. Figur 3). Diese Bereiche sind in Figur 3 schraffiert eingezeichnet. Beispielsweise kann das Klebemittel in der Umgebung der Durchgangslöcher 8, 9, 10, 11, die außerhalb des von der Dichtung 21 umschlossenen Bereichs liegen, appliziert werden, oder am äußersten Rand der Kühlfläche.
Entscheidend für die Erfindung ist, dass das nicht oder nur begrenzt leitfähige Klebemittel nicht auf solche Teile der Kühlfläche aufgetragen wird, die unmittelbar auf der Rückseite der aktiven Fläche liegen, denn der Stromfluss von der aktiven Fläche der ersten Polplatte zur aktiven Fläche der nächsten Polplatte folgt im wesentlichen dem kürzesten Weg quer durch die Polplatte. Daher wird der Bereich der Kühlfläche, der unmittelbar auf der Rückseite der aktiven Fläche liegt, für den elektrischen Kontakt zur zweiten Polplatte benötigt. Üblicherweise ist die von der Dichtung umschlossene Kühlmittelverteilstruktur so angeordnet, dass sie sich auf der Rückseite der aktiven Fläche befindet. Die Peripherie der Kühlfläche liegt dagegen außerhalb des für den direkten Stromfluss benötigten Bereichs und steht daher als Klebefläche zur Verfügung.
Innerhalb dieser Fläche kann das Klebemittel punktuell oder flächig aufgetragen werden. In Figur 3 sind beispielhaft einige außerhalb der aktiven Fläche aufgetragene Punkte des Klebemittels 25 eingezeichnet.

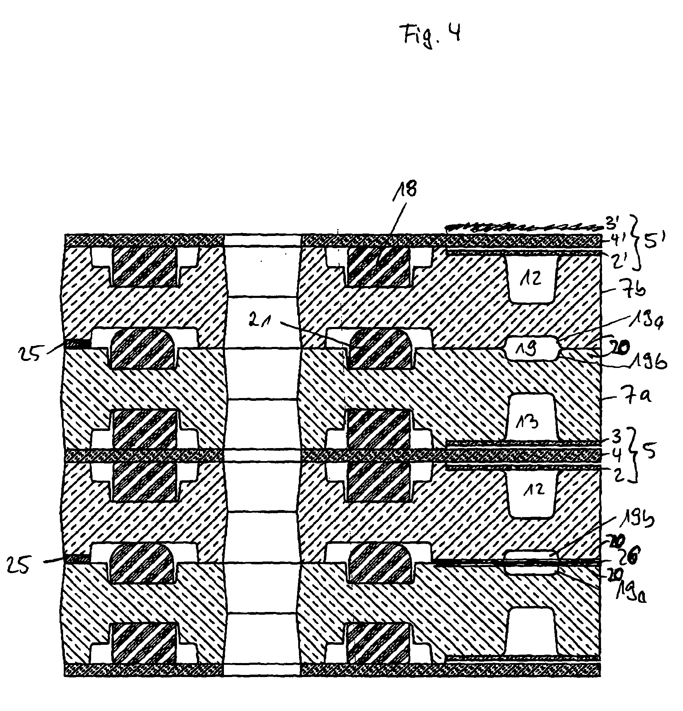

Das punktuelle Auftragen ist aus wirtschaftlichen Gründen bevorzugt, sofern damit eine ausreichende Klebewirkung erhalten wird. Das Klebemittel wird entweder auf eine der beiden miteinander zu verbindenden Flächen aufgetragen, oder auf beide.
Um zu verhindern, dass die Klebemittelschicht als Abstandshalter zwischen den Kühlflächen wirkt und so deren elektrischen Kontakt beeinträchtigt, ist es vorteilhaft, die für die Applikation des Klebemittels vorgesehenen Oberflächenbereiche relativ zu den in elektrischem Kontakt stehenden Bereichen etwas zu vertiefen. Diese Situation ist in Figur 4 dargestellt. Im Bereich des Klebemittelauftrags 25 ist die kühlflächenseitige Oberfläche der Polplatte 7b im Vergleich zu den nicht für den Klebmittelauftrag vorgesehenen Oberflächenbereichen etwas zurückgenommen (vertieft).
Diese Vertiefungen können beispielsweise in die Kühlflächen der bereits strukturierten Polplatten eingefräst werden, oder es werden bereits unmittelbar bei der Fertigung der Polplatten im Spritzguss- oder Presswerkzeug entsprechende Vertiefungen vorgesehen. Die Vertiefungen sind so auszulegen, dass sie eine Klebemittelschicht mit einer für die Haftung der Klebeflächen aneinander ausreichenden Stärke aufnehmen können. Anderseits dürfen sie nicht so tief sein, dass die eingebrachte Klebemittelschicht keinen Kontakt zur Klebefläche der zweiten Polplatte hat bzw. zur Verbindung der Klebeflächen miteinander eine unnötig dicke Klebemittelschicht erforderlich wäre.
Das Klebemittel wird unter Druck ausgehärtet, ggf. bei erhöhter Temperatur. Dazu wird das Kühlplattenmodul in einer Presse mit einem solchen Druck beaufschlagt, welcher die Dichtung soweit komprimiert, dass eine Dichtwirkung erzielt wird. Für Dichtungen aus TPE beträgt dieser Druck beispielsweise 0,5 bis 8 MPa. Rationellerweise werden zum Aushärten mehrere Kühlplattenmodule übereinander gestapelt in die Presse eingelegt.

Die erfindungsgemäßen Kühlplattenmodule sind montagefertig und können mit Membran-Elektroden-Einheiten in bekannter Weise zu Brennstoffzellenstacks kombiniert werden..
Die Funktion des Klebemittels besteht im wesentlichen darin, die beiden Polplatten in ihrer Lage zueinander zu fixieren und zu einer Baugruppe zu verbinden, um so die Montage des Stacks zu erleichtern. Die Klebeverbindung selbst muss nicht dicht sein, da erfindungsgemäß eine Dichtung zwischen den Kühlflächen vorgesehen ist. Daher ist es auch nicht unbedingt notwendig, dass das Klebemittel dauerhaft beständig ist. Eine temporäre Klebewirkung während der Montage, d.h. bis der Stack verspannt wird, ist im Prinzip ausreichend. Danach ist die Klebewirkung nicht mehr zwingend erforderlich, da nunmehr die Komponenten des Stacks durch die Verspannung ohnehin in ihrer Lage fixiert sind. Daher können erfindungsgemäß auch Klebemittel verwendet werden, deren Wirksamkeit zeitlich begrenzt ist, jedoch zumindest während der Dauer der Stackmontage anhält. Die Montage eines Stacks unter Verwendung von Kühlplattenmodulen, die mit einem nur temporär wirkenden Klebemittel zusammengehalten werden, umfasst im wesentlichen die folgenden grundlegenden Schritte:
- Bereitstellen von anodenseitigen und kathodenseitigen Polplatten, Dichtungen und Membran-Elektroden-Einheiten in der gewünschten Anzahl
- Einbringen der Dichtungen 21 zwischen den Kühlflächen der Polplatten
- Herstellen von Kühlplattenmodulen durch Verbinden der Kühlflächen der Polplatten durch ein Klebemittel, welches auf die Peripherie mindestens einer der zu verbindenden Kühlflächen appliziert wird
- Alternierendes Übereinanderstapeln von Kühlplattenmodulen und MEA, so dass jeweils auf die Anodenplatte eines Kühlplattenmoduls die Anode einer MEA und auf die Kathodenplatte eines Kühlplattenmoduls die Kathode einer MEA folgt, wobei die Grenzflächen zwischen MEA und Polplatten in geeigneter, dem Fachmann bekannter Weise abzudichten sind.
- Anbringen von Stromabnehmern vor der ersten und nach der letzten MEA
- Ggf. Anbringen externer Manifolds u.a. Zusatzkomponenten
- Verspannen des Stapels zwischen Endplatten.
wobei die Klebewirkung des Klebemittels im wesentlichen nur für die Dauer des Montagevorgangs anhält.

Die Erfindung ist nicht an die Verwendung eines bestimmten Kühlmittels gebunden. Weil Klebemittel und Kühlmittel nicht miteinander in Kontakt kommen, braucht sich die Auswahl des Kühlmittels nur nach der gewünschten Betriebstemperatur des Brennstoffzellenstacks zu richten. Typischerweise verwendete Kühlmittel sind Wasser, vorzugsweise deionisiertes Wasser, ggf. mit Zusatz eines Frostschutzmittels, oder Thermalöl.

Falls erforderlich, kann zur Verminderung des Kontaktwiderstands zwischen den Kontaktelementen der Kühlflächen ein flächiges leitfähiges Element eingelegt werden, das beispielsweise ein Metallblech, eine Metallfolie oder Graphitfolie oder ein Filz, Vlies, Gelege Gewebe oder Papier aus Carbon- oder Graphitfasern enthält. Diese Situation wird im unteren Teil von Figur 4 gezeigt. Das flächige leitfähige Element 26 erstreckt sich maximal nur über den von der Dichtung 21 umschlossenen Bereich der Kühlflächen, in welchem die für den Kontakt zwischen den Kühlflächen nötigen Stege 20 befinden. Sind beide Kühlflächen mit Kanälen 19a, 19b versehen, dann trennt dieses flächige leitfähige Element die Kühlkanäle auf der Kühlfläche der ersten Polplatte von den Kühlkanälen auf der Kühlfläche der zweiten Polplatte. Alternativ kann ein flächiges leitfähiges Element mit Perforationen, welche die Kühlkanäle auf der Kühlfläche der ersten Polplatte mit denen auf der Kühlfläche der zweiten Polplatte verbinden, angewendet werden. Diese Variante ist jedoch weniger bevorzugt wegen des höheren Montageaufwands, da die Perforationen passgenau zu den Kanälen positioniert werden müssen.

Besonders geeignet zur Verbesserung des elektrischen Kontakts zwischen den Kühlmittelverteilstrukturen ist Graphitfolie, da diese sich sehr gut an die benachbarten Oberflächen anpasst und eventuelle Abweichungen von der Parallelität der Polplatten ausgleichen kann.

### Ausführungsbeispiele

Es wurden 3 mm dicke spritzgegossene Polplatten aus einem Graphit-Thermoplast-Verbundwerkstoff verwendet. Die Polplatten 7a waren mit einer kathodenseitigen Oxidationsmittelverteilstruktur und auf der Kühlfläche mit einer Kühlmittelverteilstruktur versehen. Die Polplatten 7b waren mit einer anodenseitigen Brennstoffverteilstruktur und auf der Kühlfläche mit einer Kühlmittelverteilstruktur, die das Spiegelbild der Kühlmittel-verteilstruktur auf der Kühlfläche der Polplatte 7a darstellte, vesehen.
Die Dichtungen 21 bestanden aus Ethylen-Propylen-Dien-Elastomer und wurden in die Dichtungsnut eingeklebt.
Es wurden zwei Kühlplattenmodule hergestellt, eines davon mit einem zwischen den Kühlflächen eingelegten flächigen Element 26 aus Graphitfolie, das sich über den von der Dichtung 21 umschlossenen Bereich der Kühlflächen erstreckte.
Vor der Herstellung der Module wurden der Durchgangswiderstand (d.h. der Widerstand senkrecht zur Plattenfläche) und die Parallelität (Differenz zwischen dem größten und dem kleinsten Wert aus Dickenmessungen an vier gleichmäßig über die Platte verteilten Messpunkten).
Zum Verbinden der Kühlflächen wurde ein Epoxidharz-Klebemittel verwendet. Der Klebstoffauftrag erfolgte wie in Figur 3 dargestellt. Zur Aushärtung der Klebeverbindung wurden die Kühlplattenmodule eine Stunde lang bei Raumtemperatur mit einem Druck von 1,3 MPa beaufschlagt.
Von den so hergestellten Verbünden wurden die Parallelität und der Durchgangswiderstand bestimmt. Die Ergebnisse sind in der folgenden Tabelle 1 zusammengetragen.

**Tabelle 1 Charakterisierung der Polplatten und daraus hergestellten Kühlplattenmodule**

| | Kühlplattenmodul mit Graphitfolie | Kühlplattenmodul ohne Graphitfolie |
|---|---|---|
| Durchgangswiderstand der Platte 7a / mΩ*cm² | 10,9 | 11,6 |
| Durchgangswiderstand der Platte 7b / mΩ*cm² | 11,6 | 11,3 |
| Summe der Durchgangswiderstände der Kühlplatten 7a und 7b / mΩ*cm² | 22,5 | 22,9 |
| Durchgangswiderstand des Kühlplattenmoduls / mΩ*cm² | 20,2 | 30,4 |
| Kontaktwiderstand/ mQ*cm² | -2,3 | 7,5 |
| Parallelität der Polplatte 7a / mm | 0,02 | 0,1 |
| Parallelität der Polplatte 7b / mm | 0,08 | 0,09 |
| Parallelität des Kühlplattenmoduls / mm | 0,07 | 0,07 |

Die gemessenen Durchgangswiderstände der einzelnen Komponenten enthalten Beiträge von den beiden Grenzflächen Polplatte/Messelektrode, die entsprechend auch in die Summe eingehen. Ist der Übergangswiderstand zwischen den verbundenen Polplatten kleiner als der zweifache Übergangswiderstand Polplatte/Messelektrode, so ist der Durchgangswiderstand des Verbundes kleiner als die Summe der Durchgangswiderstände der Komponenten. Die eingelegte Graphitfolie verminderte dank ihrer Fähigkeit, sich an die Kontaktflächen anzupassen, den Durchgangswiderstand des Verbundes soweit, dass er kleiner war als die Summe der Durchgangswiderstände beider Komponenten. Bedingt durch einen hohen Übergangswiderstand an den Berührungsstellen zwischen den Kühlflächen, war der Durchgangswiderstand des Moduls ohne eingelegte Graphitfolie jedoch höher als die Summe der Widerstände der einzelnen Polplatten. Hier lassen sich eventuell noch Verbesserungen erreichen durch die vorgeschlagene Vertiefung der Klebflächen.
Die Parallelität der Module war stets besser als die Summe der Parallelitäten der einzelnen Polplatten. Offensichtlich kompensieren sich im Verbund die Abweichungen der einzelnen Polplatten von der Parallelität zumindest teilweise. Zum Ausgleich ggf. auftretender Parallelitätsabweichungen der Platten ist also die dazwischen gelegte Graphitfolie hier nicht zwingend notwendig.

## Patentansprüche

1. Kühlplattenmodul für einen Brennstoffzellenstack, umfassend eine kathodenseitige und eine anodenseitige Polplatte (7a, 7b), deren aneinander stoßende Oberflächen als Kühlflächen eine von einer Dichtung (21) umfasste und von einem Kühlmittel durchströmte Kühlmittelverteilstruktur aus Kanälen (19) dicht umschließen und im Bereich der Kühlmittelverteilstruktur in direktem elektrischen Kontakt miteinander stehen, **dadurch**
**gekennzeichnet, dass**
die kathodenseitige und die anodenseitige Polplatte (7a, 7b) miteinander durch ein Klebemittel verbunden sind, welches außerhalb des von der Dichtung (21) umfassten Bereichs auf mindestens eine der Kühlflächen aufgebracht ist.

2. Kühlplattenmodul nach Anspruch 1, **dadurch gekennzeichnet, dass** das Klebemittel elektrisch nicht leitfähig ist.

3. Kühlplattenmodul nach Anspruch 1 oder 2, **dadurch gekennzeichnet, dass** das Klebemittel ein Klebemittel auf der Basis von Cyanacrylat oder Epoxidharz ist.

4. Kühlplattenmodul nach einem der vorhergehenden Ansprüche, **dadurch gekennzeichnet, dass** nur in eine die Kühlfläche einer der beiden Polplatten (7a, 7b) eine Kühlmittelverteilstruktur bildende Kühlkanäle (19) eingelassen sind, welche von der ebenen Kühlfläche der zweiten Polplatte bedeckt werden.

5. Kühlplattenmodul nach einem der vorhergehenden Ansprüche, **dadurch gekennzeichnet, dass** die Kühlflächen beider Polplatten (7a, 7b) Kühlmittelverteilstrukturen aufweisen, wobei die Kühlmittelverteilstruktur (19b) auf der Kühlfläche der zweiten Polplatte (7b) das Spiegelbild der Kühlmittelverteilstruktur (19b) auf der Kühlfläche der ersten Polplatte (7a) ist.

6. Kühlplattenmodul nach einem der vorhergehenden Ansprüche, **dadurch gekennzeichnet, dass** sich zwischen den Kühlflächen ein flächiges leitfähiges Element (26) befindet, welches sich nur innerhalb des von der Dichtung (21) umschlossenen Bereichs der Kühlflächen erstreckt.

7. Kühlplattenmodul nach Anspruch 6, **dadurch gekennzeichnet, dass** das flächige leitfähige Element (26) Graphitfolie oder ein Vlies, Filz, Gewebe, Gelege oder Papier aus Graphit- oder Carbonfasern enthält.

8. Kühlplattenmodul nach einem der vorhergehenden Ansprüche, **dadurch gekennzeichnet, dass** auf mindestens einer der zu verbindenden Kühlflächen außerhalb des von der Dichtung (21) umfassten Bereichs Vertiefungen zur Aufnahme des Klebemittels vorgesehen sind.

9. Verfahren zur Montage eines Brennstoffzellenstacks, umfassend die Schritte
• Bereitstellen von kathodenseitigen und anodenseitigen Polplatten (7a, 7b), Dichtungen (18, 21) und Membran-Elektroden-Einheiten (5, 5') in der gewünschten Anzahl, und aller weiteren erforderlichen Komponenten
• Einbringen der Dichtungen (21) zwischen den Kühlflächen der Polplatten
• Herstellen von Kühlplattenmodulen durch Verbinden der Kühlflächen der Polplatten (7a, 7b) durch ein Klebemittel, welches auf mindestens einer der zu verbindenden Kühlflächen außerhalb der von der Dichtung (21) umschlossenen Kühlmittel-verteilstruktur appliziert wird
• Alternierendes Übereinanderstapeln von Kühlplattenmodulen und MEA, so dass jeweils auf die Anodenplatte eines Kühlplattenmoduls die Anode einer MEA und auf die Kathodenplatte eines Kühlplattenmoduls die Kathode einer MEA folgt, wobei die Grenzflächen zwischen MEA und Polplatten abgedichtet werden
• Anbringen von Stromabnehmern vor der ersten und nach der letzten MEA
• Anbringen von externen Medienzufuhr- und -abfuhrleitungen, falls keine internen Medienzufuhr- und -abfuhrleitungen vorgesehen sind
• Verspannen des Stapels zwischen Endplatten.
**dadurch gekennzeichnet, dass** die Wirksamkeit des Klebemittels im wesentlichen nur während der Dauer des Montageprozesses anhält.

10. Verfahren nach dem vorhergehenden Anspruch, **dadurch gekennzeichnet, dass** zwischen den Kühlflächen ein flächiges leitfähiges Element (26) eingelegt wird, welches sich nur innerhalb des von der Dichtung (21) umschlossenen Bereichs der Kühlflächen erstreckt.

11. Verfahren nach dem vorhergehenden Anspruch, **dadurch gekennzeichnet, dass** das flächige leitfähige Element (26) Graphitfolie oder ein Vlies, Filz, Gewebe, Gelege oder Papier aus Graphit- oder Carbonfasern enthält.
